Europäisches Patentamt

European Patent Office

Office européen des brevets

(19)

(11) Numéro de publication: **0 156 670**

**B1**

(12) # FASCICULE DE BREVET EUROPÉEN

(45) Date de publication du fascicule du brevet:
18.05.88

(21) Numéro de dépôt: **85400269.8**

(22) Date de dépôt: **15.02.85**

(51) Int. Cl.⁴: **F 02 M 23/06**

(54) **Dispositif de carburation pour moteur.**

(30) Priorité: **09.03.84 FR 8403652**

(43) Date de publication de la demande:
**02.10.85 Bulletin 85/40**

(45) Mention de la délivrance du brevet:
**18.05.88 Bulletin 88/20**

(84) Etats contractants désignés:
**AT BE CH DE GB IT LI LU NL SE**

(56) Documents cité:
**FR-A-2 163 256**
**US-A-1 395 170**
**US-A-1 432 900**
**US-A-4 052 968**

(73) Titulaire: **Maraux, Jean, 43 Avenue Foch, F-95170 Deuil La Barre (FR)**

(72) Inventeur: **Maraux, Jean, 43 Avenue Foch, F-95170 Deuil La Barre (FR)**

(74) Mandataire: **Hirsch, Marc- Roger, Cabinet Hirsch 34 rue de Bassano, F-75008 Paris (FR)**

EP 0 156 670 B1

## Description

La présente invention a pour objet un dispositif de carburation pour l'alimentation en mélange air-carburant d'au moins une chambre de combustion de moteur à combustion interne, constitué d'un premier passage de formation d'un mélange "riche" en carburant et d'un deuxième passage d'air non carburé sur lequel est disposé un étranglement réglable déterminant la richesse finale en carburant de l'air aspiré dans ladite chambre de combustion, un organe de réglage de la section de l'étranglement étant couplé à un moteur d'actionnement dont la position est asservie à la vitesse de rotation du moteur à combustion par l'intermédiaire d'un bloc d'asservissement, la section d'étranglement étant obturée pour les faibles vitesses de rotation du moteur voisines de sa vitesse de ralenti et l'asservissement de l'organe de réglage s'effectuant avec un léger retard.

La plupart des carburateurs utilisés pour l'alimentation en mélange air-carburant des moteurs d'automobile à allumage commandé comportent une pompe à essence dite "de reprise". Cette pompe a pour fonction d'injecter une quantité de carburant vaporisable, en principe de l'essence de pétrole, prédéterminée et croissante avec la course de la pédale d'accélérateur de telle manière que les parois des conduites d'amenée d'air au moteur soient mouillées par le carburant et qu'après une ouverture brutale du carburateur, le mélange air-essence conserve une richesse en essence voisine de celle du mélange détonant ou stoechiométrique. En effet, à grande ouverture du carburateur, la vaporisation de l'essence se produit non seulement dans le carburateur mais aussi tout le long des conduits d'admission mouillés par l'essence en excès et situés en aval du carburateur.

L'action de la pompe de reprise du carburateur se traduit à chaque enfoncement de la pédale d'accélération par une injection supplémentaire d'essence qui peut atteindre plusieurs cm³ par coup selon les types de moteur utilisés. En dehors des reprises d'accélération à bas régime de rotation, cette injection supplémentaire d'essence n'est pas utile pour effacer un trou de carburation. Pour supprimer la consommation d'essence causée par l'actionnement de la pompe de reprise et le risque de lessivage de l'huile de graissage par cette essence imbrûlée injectée à chaque accélération, il a été proposé de supprimer la pompe de reprise ou bien de n'autoriser son fonctionnement que pour les basses vitesses de rotation du moteur, mais ces dispositions acceptables pour les conducteurs peu exigeants sur le chapitre des performances, se traduisent toujours par des insuffisances de carburation en particulier au cours de la marche à froid du moteur et ne peuvent être généralisées.

On connait des FR-A-2 163 256, US-A-1 432 900 et US-A-1 395 170 des dispositifs de carburation pour l'alimentation en mélange air-carburant de moteur à combustion interne. Aucun de ces documents cependant n'a trait au comportement du dispositif de réglage au cours de la marche au ralenti du moteur à combustion ou au voisinage du régime de marche au ralenti.

La présente invention se propose de supprimer la pompe de reprise du carburateur tout en obtenant pour le mélange carburé un effet d'appauvrissement qui soit croissant avec la vitesse de rotation du moteur mais dont la croissance soit de moins en moins rapide, de telle manière que la carburation du mélange soit toujours voisine de l'optima (mélange stochiométrique) et réduise la consommation du moteur tout en améliorant sa facilité à changer de régime.

A cet effet, selon l'invention, la section d'étranglement comporte une première partie consistant en un orifice de grande section qui est ouverte rapidement par le moteur d'actionnement jusqu'à une section significative à partir d'une vitesse prédéterminée du moteur à combustion légèrement supérieure à la vitesse de ralenti et dite "de réduction de reprise" et une deuxième partie consistant en un orifice de petite section ouverte en supplément du premier orifice, qui n'est ouverte par le moteur d'actionnement qu'après dépassement par le moteur à combustion d'une deuxième vitesse prédéterminée plus élevée dite "de coupure de reprise", et qui continue de s'ouvrir selon une loi de croissance lente sur toute la plage de vitesse de rotation du moteur à combustion qui est supérieure à la deuxième vitesse prédéterminée et en ce que l'asservissement de l'organe de réglage à la vitesse de rotation du moteur à combustion s'effectue avec retard uniquement dans le sens de la montée en vitesse dudit moteur pour provoquer un effet de pompe de reprise.

L'asservissement de l'organe de réglage à la vitesse de rotation du moteur s'effectue de préférence avec un léger retard dans le sens de la montée en vitesse du moteur de manière à accentuer l'effet de pompe de reprise, c'est-à-dire l'enrichissement en carburant, provoqué par la fermeture ou l'étranglement du deuxième passage d'air.

Selon un autre mode de réalisation de l'invention, le bloc d'asservissement est relié à des moyens de correction manuels tels que des potentiomètres, aptes à modifier manuellement soit la butée du moteur d'actionnement pour les faibles vitesses de rotation de manière à régler manuellement le ralenti, soit la loi ou l'algorithme d'asservissement du moteur d'actionnement à la vitesse de rotation de manière à corriger manuellement la carburation en fonction de l'altitude ou du carburant utilisé.

En variante, l'organe de réglage de la section de l'étranglement peut coopérer avec un organe obturateur du gicleur et/ou du circuit de ralenti du moteur de manière à obturer le gicleur et/ou le circuit de ralenti, dès que le moteur a dépassé la deuxième vitesse prédéterminée dite de coupure de reprise.

Selon le mode de réalisation considéré comme l'un des meilleurs, l'organe de réglage de la section d'étranglement est constitué par une lumière en forme d'arc de cercle ménagée dans un flasque de fermeture du deuxième passage supportant un volet rotatif dans lequel est prévu, en regard de la lumière du flasque, une lumière correspondante, l'une de ces lumières étant formée d'une partie d'arc de grande largeur constituant un trou de passage et raccordée à une autre partie d'arc de faible largeur constituant une fente de passage et le volet rotatif est solidaire d'un arbre de commande relié au rotor du moteur d'actionnement de telle manière que pour les faibles vitesses de rotation du moteur, le volet rotatif vienne obturer la totalité de la lumière du flasque puis qu'à partir du dépassement de la première vitesse prédéterminée de rotation du moteur, la partie d'arc de grande largeur prévue sur l'une des lumières vienne se placer progressivement en face de l'autre lumière et qu'après dépassement de la deuxième vitesse prédéterminée de rotation du moteur, la partie d'arc de faible largeur vienne s'ajouter progressivement à la partie d'arc de grande largeur en face de l'autre lumière et augmenter progressivement la section d'étranglement du deuxième passage d'air.

Le volet rotatif peut être relié mécaniquement à un profil de came apte à coopérer avec un organe de coupure, tel qu'un clapet, du gicleur et/ou du circuit de ralenti du moteur, ledit profil de came agissant sur ledit organe de coupure dès que la partie d'arc de grande largeur de la lumière du volet rotatif est venue se placer complètement en face de la lumière du flasque de fermeture.

Selon un autre mode de réalisation, le moteur d'actionnement est un moteur électrique pas à pas couplé, par l'intermédiaire du bloc d'asservissement constitué par un circuit électronique d'amplification, au distributeur d'allumage du moteur utilisé comme générateur de l'image de la vitesse de rotation du moteur et la position angulaire du moteur pas à pas est contrôlée à l'aide d'un potentiomètre de recopie qui est actionné de préférence par une liaison mécanique interposée de façon angulairement réglable entre le moteur électrique pas à pas et l'organe de réglage de la section de l'étranglement.

D'autres buts, avantages et caractéristiques de l'invention apparaîtront à la lecture de la description d'un mode de réalisation de l'invention, faite à titre non limitatif et en regard du dessin annexé où:

- la figure 1 est une vue en coupe schématique d'un dispositif de carburation ou carburateur selon l'invention;

- les figures 2a à 2c sont des vues en plan du détail repéré par les lignes II-II de la figure 1, pour diverses positions du volet d'air additionnel.

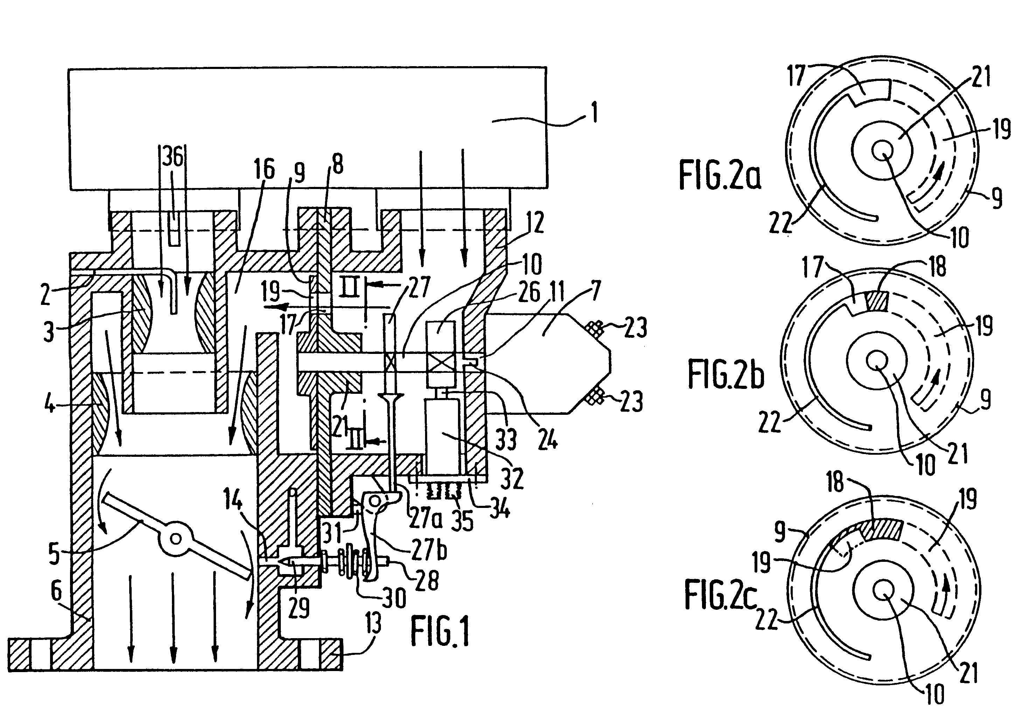

Le carburateur représenté en coupe sur la figure 1 est alimenté en air extérieur à travers un filtre à air 1 et est destiné à être raccordé à une pipe d'aspiration de moteur par une bride 13. Ce carburateur comporte un premier passage d'air comportant de façon connue: un ajutage 2 d'arrivée d'essence raccordé à une cuve à niveau constant non représentée, un premier diffuseur 3 du mélange air-essence suivi d'un deuxième diffuseur 4 raccordé à un deuxième passage d'air 16 constituant une arrivée réglable d'air additionnel. Un papillon de carburateur 5 placé en aval permet, par sa rotation sous le contrôle du conducteur, de régler le débit d'air total aspiré par le moteur à travers le carburateur et par là le couple instantané du moteur. En position fermée, le papillon 5 vient s'appliquer sur les parois intérieures du passage du corps moulé 6 du carburateur, sans pour autant venir obturer l'admission du circuit de ralenti 14 qui constitue un petit carburateur fonctionnant lorsque le papillon 5 est obturé et dont la richesse est réglable à l'aide d'une vis de richesse de ralenti non représentée.

Selon l'invention, le deuxième passage d'air 16 est obturé par un flasque de fermeture 8 formé d'une plaque serrée par des vis sur le corps 6 du carburateur et qui présente, comme représenté en détail sur les figures 2a à 2c, une lumière en forme d'arc de cercle constituée d'une partie courte d'arc de grande largeur 17 et d'une autre partie d'arc plus longue et de faible largeur 22. La lumière du flasque est susceptible d'être obturée par un volet rotatif 9 formant volet d'air additionnel et solidaire d'un arbre 10 guidé dans un palier 21 du flasque de fermeture 8. L'arbre 10 du volet rotatif porte deux profils de came 26 et 27 et est relié par un accouplement souple et/ou réglable 24 à l'arbre 11 d'un moteur d'actionnement du volet rotatif 9, constitué par un moteur électrique pas à pas 7 dont les bornes électriques de raccordement 23 à un bloc d'asservissement électronique (non représenté) sont visibles.

Le moteur 7 est flasqué sur le boîtier d'air additionnel 12, lui-même fixé sur le corps 6 en serrant le flasque de fermeture 8 sur ce corps. Le volet rotatif 9 comporte une lumière de passage d'air formée d'une partie d'arc 19 de largeur sensiblement égale à la largeur de la partie d'arc courte 17 mais s'étendant sur presque un demi-cercle (voir la figure 2a). L'arbre 10 solidaire du volet 9 supporte un profil de came 27 qui est susceptible de repousser par l'intermédiaire d'une tige 27a et d'un levier de renvoi 27b, la tige 28 d'un clapet 29 obturant le passage d'air de ralenti sous l'action d'un ressort 30. En cas de besoin, l'action du levier 27b peut être annulée par tout moyen adéquat tel qu'une cale 31 afin de rétablir le circuit de ralenti. La partie inférieure du boîtier d'air additionnel 12 reçoit un potentiomètre de recopie 32 dont le poussoir 33 vient se placer en face de la came 26 et dont la partie inférieure porte un flasque de fixation 34 sur le boîtier 12 et des bornes 35 de raccordement à un circuit électrique de contrôle.

Le fonctionnement du carburateur et du dispositif de carburation selon l'invention va maintenant être décrit.

Le premier passage d'air produit dans le premier diffuseur 3 un mélange (généralement sous forme de mousse ou d'émulsion) d'air et d'essence relativement trop riche en carburant. Un volet de starter 36 est prévu en amont du diffuseur 3 pour permettre de réaliser un surenrichissement du mélange air-carburant pour le démarrage du moteur par temps froid. Le mélange riche en provenance du premier diffuseur 3 est appauvri au niveau du deuxième diffuseur 4 par introduction d'air pur et non enrichi en carburant et dont le débit est réglé par la position du volet rotatif 9. Le mélange air-essence qui s'écoule au-delà du papillon de gaz 5 vers le moteur est parfaitement homogénéisé grâce à la double diffusion réalisée dans le carburateur et contient une proportion de carburant voisine de celle du mélange stoechiométrique qui, pour l'essence correspond à environ quinze masses d'air pour une masse de carburant, l'allumage du mélange carburé étant encore assuré, pour des rapports de mélange qui ne différent pas trop du rapport idéal (en mélange riche ou en mélange pauvre).

Lorsque le moteur tourne au ralenti (pour des régimes compris entre 600 et 1 000 tours par minute pour les moteurs d'automobiles courants), le papillon des gaz 5 est fermé et le moteur est alimenté par le circuit de ralenti 14 car le volet mobile 9 est placé par son moteur d'actionnement 7 dans une position où les lumières 17 et 22 sont fermées et où le profil de came 27 ne repousse pas la tige 27a vers le bas pour laisser s'ouvrir le clapet 29. Si le conducteur du véhicule effectue une ouverture brutale du papillon 5, il s'écoule immédiatement vers le moteur, un mélange d'air riche en carburant qui donne à l'entrée dans les cylindres du moteur après condensation partielle sur les parois d'aspiration, un mélange quasi stoechiométrique qui s'allume bien et le trou de carburation à l'accélération est supprimé aussi bien qu'avec la pompe de reprise des carburateurs de type connu. Lorsque le régime du moteur s'élève, le moteur d'actionnement 7 est actionné pas à pas par l'intermédiaire du circuit électronique (non représenté) sensible à la vitesse de rotation du moteur (relevée au niveau du distributeur d'allumage) et le volet mobile 9 tourne pour venir ouvrir un passage d'air représenté par la partie hachurée 18 sur la figure 2b. Le débit d'air additionnel arrivant au deuxième diffuseur 4 réduit la richesse de l'air en carburant.

Lorsque la vitesse du moteur continue à s'élever, le volet mobile 9 continue à tourner et la partie 22 de la lumière du flasque de fermeture 8 s'ouvre progressivement à son tour (voir la zone hachurée 18 sur la figure 2c) provoquant cette fois un appauvrissement de l'air en carburant pour les régimes normaux du moteur. Cette correction rétablit à haut régime du moteur une richesse normale pour le mélange air-essence. En effet, dans les carburateurs courants, la viscosité cinématique de l'air plus élevée que celle de l'essence provoque un enrichissement exagéré en carburant pour les forts débits d'aspiration ce qui se traduit par une consommation exagérée de carburant et un échappement polluant (fumées de reprise) qui sont supprimés par le dispositif de carburation selon l'invention. On notera que l'hystérésis de la commande du moteur pas à pas par rapport à la montée du régime moteur provoque l'effet de pompe de reprise à tous les régimes de rotation lents et jusqu'à un régime correspondant à la pleine ouverture de l'arc de grande largeur 17 pour la deuxième vitesse prédéterminée de rotation (celle pour laquelle l'effet de pompe de reprise n'est plus utile).

Afin de repérer fidèlement la position du volet 9 et de recaler la position du moteur 7 par rapport à son circuit électronique de commande, le potentiomètre de recopie 32 est actionné par la came 26 solidaire du volet 9 et adresse à ce circuit électronique un signal de position qui ne dépend que de la position du volet 9 indépendamment du couplage entre ce volet 9 et le rotor du moteur 7 via l'accouplement 24.

En cas de panne du moteur 7 ou de son circuit électronique de commande, une commande manuelle peut être prévue pour amener le volet 9 en position d'ouverture en grand du deuxième passage d'air additionnel, ce qui correspond à la suppression de la pompe de reprise et n'interdit pas l'usage du carburateur dont le papillon des gaz doit alors être actionné progressivement sous peine de provoquer des "hoquets" de carburation. Pour rétablir l'usage du circuit de ralenti en cas de panne du moteur 7, on peut bloquer le levier 27b par la cale 31 afin de maintenir le clapet 29 ouvert sous l'action d'un ressort de rappel 15, ce qui maintient le circuit de ralenti ouvert en permanence et non pas seulement pour les basses vitesses de rotation du moteur. En service normal, le clapet 29 coupe le ralenti pendant les phases de frein-moteur.

Le circuit électronique (non représenté) de commande du moteur 7 est sensible à la vitesse de rotation de ce moteur qu'il traduit (de façon proportionnelle ou non proportionnelle) en rotation du moteur 7 d'actionnement du volet rotatif 9. De nombreux paramètres annexes comme la température de l'air d'admission, la température du moteur, peuvent influer sur ce circuit électronique à la manière de la commande électronique d'un circuit d'injection d'essence. On peut prévoir également des actions manuelles sur ce circuit électronique afin de permettre de régler manuellement, de préférence à l'aide de potentiomètres, des caractéristiques de fonctionnement du moteur telles que: le régime de ralenti accéléré, l'algorithme d'asservissement de l'air additionnel au régime moteur afin de corriger manuellement la carburation en fonction de l'altitude ou du carburant utilisé.

**Revendications**

1. Dispositif de carburation pour l'alimentation en mélange air-carburant d'au moins une chambre de combustion de moteur à combustion interne, constitué d'un premier passage (2, 3) de formation d'un mélange "riche" en carburant et d'un deuxième passage (16) d'air non carburé sur lequel est disposé un étranglement réglable (18) déterminant la richesse finale en carburant de l'air aspiré dans ladite chambre de combustion, un organe (8, 9) de réglage de la section de l'étranglement (18) étant couplé à un moteur d'actionnement (7) dont la position est asservie à la vitesse de rotation du moteur à combustion par l'intermédiaire d'un bloc d'asservissement, la section d'étranglement étant obturée pour les faibles vitesses de rotation du moteur voisines de sa vitesse de ralenti et l'asservissement de l'organe de réglage (8, 9) s'effectuant avec un léger retard, caractérisé en ce que la section d'étranglement comporte une première partie (17) consistant en un orifice de grande section qui est ouverte rapidement par le moteur d'actionnement (7) jusqu'à une section significative à partir d'une première vitesse prédéterminée du moteur à combustion légèrement supérieure à la vitesse de ralenti et dite "de réduction de reprise" et une deuxième partie (22) consistant en un orifice de petite section ouverte en supplément du premier orifice, qui n'est ouverte par le moteur d'actionnement (7) qu'après dépassement par le moteur à combustion d'une deuxième vitesse prédéterminée plus élevée dite "de coupure de reprise", et qui continue de s'ouvrir selon une loi de croissance lente sur toute la plage de vitesse de rotation du moteur à combustion qui est supérieure à la deuxième vitesse prédéterminée et en ce que l'asservissement de l'organe de réglage (8, 9) à la vitesse de rotation du moteur à combustion s'effectue avec retard uniquement dans le sens de la montée en vitesse dudit moteur pour provoquer un effet de pompe de reprise.

2. Dispositif selon la revendication 1, caractérisé en ce que le bloc d'asservissement est relié à des moyens de correction manuels tels que des potentiomètres, aptes à modifier manuellement la butée du moteur d'actionnement (7) pour les faibles vitesses de rotation de manière à régler manuellement le ralenti, et/ou la loi ou l'algorithme d'asservissement du moteur d'actionnement (7) à la vitesse de rotation, de manière à corriger manuellement la carburation du moteur à combustion pour tenir compte des variations locales, par exemple l'état du moteur, l'altitude, le carburant utilisé.

3. Dispositif selon l'une des revendications 1 ou 2, caractérisé en ce que l'organe (9) de réglage de la section de l'étranglement coopère avec un organe obturateur (29) du gicleur et/ou du circuit de ralenti (14) du moteur de manière à obturer le gicleur et/ou le circuit de ralenti dès que le moteur a dépassé la deuxième vitesse prédéterminée dite de "coupure de reprise".

4. Dispositif selon l'une des revendications 1 à 3, caractérisé en ce que l'organe de réglage de la section d'étranglement est constitué par une lumière en forme d'arc de cercle ménagée dans un flasque de fermeture (8) du deuxième passage (16) supportant un volet rotatif (9) dans lequel est prévu, en regard de la lumière du flasque, une lumière correspondante (19), l'une de ces lumières étant formée d'une partie d'arc de grande largeur (17) constituant un trou de passage et raccordée à une autre partie d'arc de faible largeur constituant une fente de passage (22) et en ce que le volet rotatif (9) est solidaire d'un arbre de commande (10) relié au rotor du moteur d'actionnement (7), de telle manière que pour les faibles vitesses de rotation du moteur à combustion, le volet rotatif vienne obturer la totalité de la lumière (17, 22) du flasque (8) puis qu'à partir du dépassement de la première vitesse prédéterminée de rotation du moteur, la partie d'arc de grande largeur (17) prévue sur l'une des lumières vienne se placer progressivement en face de l'autre lumière (19) et qu'après dépassement de la deuxième vitesse prédéterminée de rotation du moteur, la partie d'arc de faible largeur (22) vienne s'ajouter progressivement à la partie d'arc de grande largeur (17) en face de l'autre lumière (19) et augmenter lentement la section d'étranglement du deuxième passage d'air (16).

5. Dispositif selon la revendication 3, caractérisé en ce que le volet rotatif (9) est relié mécaniquement à un profil de came (27) apte à coopérer avec un organe de coupure, tel qu'un clapet (29), du gicleur et/ou du circuit de ralenti (14) du moteur, ledit profil de came agissant sur ledit organe de coupure dès que la partie d'arc de grande largeur (17) de la lumière du volet rotatif ou du flasque est venue se placer complètement en face de la lumière correspondante (19) du flasque de fermeture ou du volet rotatif.

6. Dispositif selon l'une des revendications 1 à 5, caractérisé en ce que le moteur d'actionnement (7) est un moteur électrique pas à pas couplé, par l'intermédiaire du bloc d'asservissement constitué par un circuit électronique d'amplification, au distributeur d'allumage du moteur utilisé comme générateur de l'image de la vitesse de rotation du moteur et en ce que la position angulaire du moteur pas à pas est contrôlée à l'aide d'un potentiomètre de recopie (32).

7. Dispositif selon la revendication 6, caractérisé en ce que le potentiomètre de recopie (32) est actionné par une liaison mécanique (26) interposée de façon angulairement réglable entre le moteur électrique pas à pas (7) et l'organe de réglage (9) de la section de l'étranglement.

**Patentansprüche**

1. Vergasungseinrichtung zur Versorgung wenigstens einer Brennkammer eines Verbrennungsmotors mit einem Luft-Brennstoffgemisch, umfassend einen ersten Durchlass (2, 3) zur Bildung eines brennstoffreichen Gemisches und einen zweiten Durchlass (16) für brennstoffreie Luft, der eine regulierbare Drossel (18) aufweist, die den endgültigen Brennstoffgehalt der in die Brennkammer eingesaugten Luft bestimmt, wobei ein Organ (8, 9) zum Regulieren des Drosselquerschnitts (18) mit einem Betätigungsmotor (7) verbunden ist, dessen Stellung in Abhängigkeit von der Drehgeschwindigkeit über eine Einstelleinheit festgelegt wird, derart, dass der Drosselquerschnitt bei niedrigen Drehgeschwindigkeiten des Motors, annähernd der Leerlaufgeschwindigkeit, gesperrt ist, während die Betätigung des Regelorgans (8, 9) mit einer geringfügigen Verzögerung erfolgt, dadurch gekennzeichnet, dass die Drossel in einem ersten Abschnitt eine Öffnung mit grossem Querschnitt (17) aufweist und durch den Betätigungsmotor (7) schnell in eine Stellung mit nennenswertem Öffnungsquerschnitt gebracht wird, und zwar von einer ersten vorbestimmten Verbrennungsmotordrehzahl an, die etwas höher ist, als die Leerlaufdrehzahl und "Beschleunigungsverminderungsdrehzahl" genannt wird, und dass die Drossel in einem zweiten Abschnitt (22) eine Öffnung mit kleinem freiem Querschnitt aufweist, die zusätzlich zur ersten Öffnung vom Betätigungsmotor (7) erst dann in eine geöffnete Stellung gebracht wird, wenn der Verbrennungsmotor eine zweite vorbestimmte Drehzahl überschritten hat, die höher ist, als die erste Drehzahl und "Beschleunigungsenddrehzahl" genannt wird, wobei der zweite Abschnitt kontinuierlich über den gesamten, oberhalb der zweiten vorbestimmten Drehzahl liegenden Drehzahlbereich des Verbrennungsmotors gemäss einer langsam ansteigenden Kurve geöffnet wird, und dass die Verzögerung des Regelorgans (8, 9) bei dessen Betätigung in Abhängigkeit vom Ansteigen der Verbrennungsmotor-Drehzahl lediglich erfolgt, um einen Beschleunigungspumpeneffekt zu erzeugen.

2. Vergasungseinrichtung gemäss Anspruch 1, dadurch gekennzeichnet, dass die Regeleinheit mit manuell zu betätigenden Korrekturmitteln, wie Potentiometern verbunden ist, vermittels welcher der Anschlag des Betätigungsmotors (7) bei der niedrigen Drehzahlen von Hand veränderlich ist, um den Leerlauf bzw. die Funktion oder den Algorithmus der Drehzahlabhängigkeit des Betätigungsmotors (7) einzustellen und zwar derart, dass die Korrektur der Vergasung den äusseren Einflüssen auf die Verbrennung, wie Zustand des Motors, Höhenlage oder Brennstofftyp Rechnung trägt.

3. Vergasungseinrichtung gemäss Anspruch 1 oder 2, dadurch gekennzeichnet, dass das den Drosselquerschnitt bestimmende Regelorgan (9) mit einer Verschlussvorrichtung (29) der Brennstoffdüse bzw. des Leerlaufkreislaufs (14) des Motors derart zusammenwirkt, dass es die Brennstoffdüse (14) bzw. den Leerlaufkreislauf verschliesst, wenn der Motor die zweite vorbestimmte Drehzahl (den sog. "Beschleunigungsdrehzahl-Endwert") überschritten hat.

4. Vergasungseinrichtung gemäss eines der Ansprüche 1 bis 3, dadurch gekennzeichnet, dass das Drosselquerschnitts-Regelorgan einen kreisbogenförmigen Schlitz (17) aufweist, der in einem Abschlussflansch (8) des zweiten Durchlasses (16) angeordnet ist, welcher eine drehbare Ventilscheibe (9) trägt, die, dem Schlitz des Flansches gegenüberliegend, einen mit diesem zusammenpassenden Schlitz (19) aufweist, wobei einer dieser Schlitze ein verhältnismässig breites Kreisbogensegment (17) darstellt, das eine Durchlassöffnung bildet und mit einem anderen, verhältnismässig schmalen, einen Durchlaßschlitz (22) bildenden Kreisbogensegment verbunden ist, und dass die drehbare Scheibe (9) mit einem mit dem Rotor des Stellmotors (7) verbundenen Antriebsachse (10) fest verbunden ist, derart, dass bei niedrigen Drehzahlen des Verbrennungsmotors die drehbare Scheibe den Öffnungsschlitz (17, 22) des Flansches (8) völlig verschliesst, während nach Überschreitung der ersten vorbestimmten Motordrehzahl der breite Kreisbogenschlitz (17) fortschreitend in eine Stellung gelangt, in der er dem entsprechend breiten Öffnungsschlitz (19) gegenüberliegt, und das weiterhin nach Überschreitung der zweiten vorbestimmten Motordrehzahl der schmale Teil des Kreisbogensschlitzes (22) fortschreitend dem breiten Kreisbogenschlitz (17) hinzugefügt wird, so dass er ebenfalls dem Öffnungsschlitz (19) gegenüberliegt, um den Drosselquerschnitt des zweiten Luftdurchlasses (16) langsam zu vergrössern.

5. Vergasungseinrichtung gemäss Anspruch 4, dadurch gekennzeichnet, dass die drehbare Scheibe (9) mechanisch mit einem Nockenprofil (27) zusammenwirkt, das seinerseits mit einem Verschlussorgan, wie der Ventilklappe (29) der Brennstoffdüse bzw. des Leerlaufkreislaufs (14) des Motors zusammenwirkt, wobei das Nockenprofil auf das Verschlussorgan einwirkt, wenn der breite Kreisbogenschlitz (17) der drehbaren Scheibe bzw. des Flansches völlig dem entsprechend breiten Schlitz (19) des Abschlussflansches bzw. der drehbaren Scheibe gegenüberliegt.

6. Vergasungseinrichtung gemäss eines der Ansprüche 1 bis 5, dadurch gekennzeichnet, dass der Stellmotor (7) ein elektrischer Schrittmotor ist, der über eine durch einen elektronischen Verstärkerstromkreis gebildete Einstelleinheit mit dem Zündverteiler des Motors gekuppelt ist, der die Motordrehzahl weitergibt, und dass die Winkelstellung des Schrittmotors vermittels eines Wiedergabepotentiometers (32) kontrolliert wird.

7. Vergasungseinrichtung gemäss Anspruch 6, dadurch gekennzeichnet, dass das Wiedargabepotentiometer (32) durch mechanische Verbindungsmittel (26) betätigt wird, die in regulierbarer Drehlage zwischen dem elektrischen Schrittmotor (7) und dem Regelorgan (9) zur Regulierung des Drosselquerschnitts angeordnet sind.

## Claims

1. Carburation device for supplying with air-fuel mixture at least one internal combustion engine chamber, constituted by a first passage (2, 3) for forming a fuel-rich mixture and a second passage (16) for fuel-free air on which is disposed an adjustable choke (18) determining the final richness in fuel of the intake air into the said combustion chamber, a member (8, 9) for adjusting the section of choke (18) being coupled to a driving motor (7) the position of which is servo-controlled by the speed of rotation of the combustion engine through the intermediary of a servo-unit, the choke section being sealed off at low speeds of rotation of the engine close to its idling speed, and the servo-control of the adjusting member (8, 9) being carried out with a slight time lag, characterized in that the choke section comprises a first part (17) consisting of a wide section opening that is opened rapidly by the driving motor (7) up to a significative section after a first predetermined speed of the combustion engine slightly higher than the idling speed and called "enrichment reduction" and a second part (22) consisting of a small section opening having a small open section in addition to the first opening, that is opened by the driving motor (7) only once the combustion engine has exceeded a predetermined higher speed called "enrichment cut-out", and which continues to open according to a slower increasing function over the entire range of rotational speed of the combustion engine which is higher than the second predetermined speed and in that the servo-control of the adjustment member to the speed of rotation of the combustion engine is carried out with a slight time lag only during the increase in speed of the engine so as to produce an enrichment pump effect.

2. Device according to claim 1, characterized in that the servo-unit is connected to manual correction means such as potentiometers, adapted to manually modify either the abutment of the driving motor (7) at low speeds of rotation so as to manually adjust the idling, and or the function or algorithm of the driving according to which the driving motor (7) is driven in accordance with the speed of rotation whereby the carburation is manually corrected in function of local variations, such as for example, the condition of the engine, the altitude or the fuel used.

3. Device according to any one of claims 1 or 2, characterized in that the member (9) for adjusting the choke section cooperates with a sealing member (29) of the fuel nozzle and/or of the idling circuit (14) of the engine so as to close off the fuel nozzle and/or the idling circuit once the engine has exceeded the second predetermined speed called "enrichment cut-off".

4. Device according to one of claims 1 to 3, characterized in that the member for adjusting the choke section is constituted by a slot in the form of an arc of a circle provided within a sealing flange (8) of the second passage (16) supporting a rotary shutter (9) in which is provided, opposite the slot of the flange, a corresponding slot (19), one of these slots having the shape of a broad arc portion (17) constituting a passage hole and connected to another narrow arc portion constituting a passage slot (22) and in that the rotary shutter (9) is integral with a control shaft (10) connected to the rotor of the driving motor (7) whereby at low speeds of rotation of the combustion engine, the rotary shutter seals off completely the slot (17, 22) of the flange (8), then once the engine exceeds the first predetermined rotation speed, the broad arc portion (17) provided on one of the slots is placed progressively opposite the other slot (19) and after exceeding the second predetermined speed of rotation of the engine, the narrow arc portion (22) is progressively added to the broad arc portion (17) opposite the other slot (19) and progressively increases the choke section of the second air passage (16).

5. Device according to claim 4, characterized in that the rotary shutter (9) is mechanically connected to a cam outline (27) adapted to cooperate with a cut-out member, such as a valve flap (29), of the fuel nozzle and/or idling circuit (14) of the engine, the said cam outline acting on the said cut-out member as soon as the broad arc portion (17) of the slot of the rotary shutter or of the flange is placed completely opposite the corresponding slot (19) of the sealing flange or of the rotary shutter.

6. Device according to one of claims 1 to 5, characterized in that the driving motor (7) is a step-by-step electric motor coupled, through the intermediary of the servo-unit constituted by an electronic amplification circuit, to the ignition distributor of the engine used as a generator of the image of the speed of rotation of the engine and in that the angular position of the step-by-step motor is controlled by using a recopy potentiometer (32).

7. Device according to claim 6, characterized in that the recopy potentiometer (32) is actuated by a mechanical link (26) interposed so as to be angularly adjustable between the electric step-by-step motor (7) and the member (9) for adjusting the choke section.

FIG.2a  FIG.2b  FIG.2c  FIG.1